Europäisches Patentamt

European Patent Office

Office européen des brevets

(11) Publication number: **0 303 338**
**A1**

(12) **EUROPEAN PATENT APPLICATION**

(21) Application number: **88305141.9**

(22) Date of filing: **06.06.88**

(51) Int. Cl.⁴: **A62D 3/00 , F23G 7/00**

(30) Priority: **11.08.87 JP 199223/87**
**07.03.88 JP 51737/88**

(43) Date of publication of application:
**15.02.89 Bulletin 89/07**

(84) Designated Contracting States:
**BE DE FR GB IT**

(71) Applicant: **YONEZAWA CHEMICAL INDUSTRY CO. LTD.**
**No. 14, Karahashi Ashibe-cho Minami-ku Kyoto-shi Kyoto-fu(JP)**

(72) Inventor: **Yonezawa, Taiji**
**No. 14, Karahashi Ashibe-cho Minami-ku Kyoto-shi Kyoto-fu(JP)**

(74) Representative: **Crisp, David Norman et al**
**D. YOUNG & CO. 10 Staple Inn**
**London, WC1V 7RD(GB)**

(54) Method for non-polluting processing of halogenated organic compounds.

(57) A method for processing halogenated organic compounds that causes no environmental pollution is provided. The method consists in subjecting the halogenated organic compounds to combustion treatment in the presence of charcoal and an oil and, as the case may be, also in the presence of a metallic catalyst.

EP 0 303 338 A1

## Method for non-polluting processing of halogenated organic compounds

The present invention relates to a method for non-polluting processing of halogenated organic compounds. More particularly, it relates to a method for processing of halogenated organic compounds, in particular chlorinated organic compounds, by combusting them, thereby preventing discharge of such compounds or of harmful compounds derived therefrom to the environment.

Many halogenated compounds, particularly chlorinated compounds and in particular polychlorinated aromatic or alicyclic compounds, are known to be useful in various fields of industry. They include, for example, pentachlorophenol (PCP) having herbicidal and fungicidal activities, hexachloro-cyclohexane (BHC) having insecticidal activity, and polychlorinated biphenyl (PCB) used as a thermal medium.

There are many methods for treating them after use thereof.

For example, in the case of PCB used in transformers, it may be simply buried in soil. This, however, can cause pollution as it may contaminate underground water systems. Another known method is to degrade the halogenated organic compounds by combusting them. However, halogenated organic compounds are generally resistant to thermal degradation, and hence, very high temperatures such as 1,300°C or higher are required for complete degradation of these compounds; this makes the method inefficient. Moreover, heating of halogenated organic compounds can cause conversion of such compounds to highly toxic substances, such as polychloropolybenzodioxin (PCDD) or polychlorodibenzofuran (PCDF), which may be discharged to the environment.

Such highly toxic substances are not only generated as a result of thermal conversion but are often present as impurities in halogenated organic compounds in bulk form such as PCP or 2,4,5- trichlorophenoxyacetic acid (2,4,5-T).

It is, therefore, very important to process halogenated organic compounds and/or highly toxic polyhalogenated substances efficiently without causing pollution of the environment.

In accordance with one aspect, the present invention provides a method for non-polluting processing of one or more halogenated organic compounds which comprises combusting the halogenated organic compounds together with charcoal and an oil.

In a further aspect the invention provides a method for non-polluting processing of one or more halogenated organic compounds which comprises combusting the halogenated organic compounds together with charcoal, an oil and a metallic catalyst.

In the present specification, the term "halogenated organic compounds" includes, for example, compounds which are useful of themselves such as PCB, BHC or PCP and which are treated after their use or for other reasons, and others which are useless of themselves such as PCDD or PCDF and which are required to be treated without causing pollution to the environment.

In carrying out the method of the invention, the proportion of halogenated organic compound to charcoal is not critical. Generally, charcoal is used in a major amount, for example, from 1 to 20 parts, preferably about 10 parts per part of halogenated organic compound.

Charcoal exhibits amphoteric properties, i.e. either basic or acidic properties, at temperatures of about 500-800°C. However, it acts as a Lewis acid in the presence of water at a temperature of 900°C or higher and, under these conditions, it promotes cleavage of the linkage between a carbon atom of a carbocyclic group such as a benzene ring and a halogen atom, particularly a chlorine atom, whereby the degradation of the halogenated organic compound is promoted.

In the method of this invention, the oil generally serves as a combustion aid in order to enable efficient combustion of large amounts of the halogenated organic compounds, although charcoal is combustible itself. There is no specific requirement as to the nature of the oil in view of its purpose, and animal oils, plant oils or mineral oils may be used. Normally, however, use of a heavy oil is recommended from the viewpoint of economy. A typical heavy oil which may, for example, be used in the method, has the following characteristics: pour point of 30°C or less, kinematic viscosity of about 20 cps (50°C), flash point of about 65°C, and heat of combustion of 9,700 Kcal/kg.

The proportion of halogenated organic compound and charcoal to the oil varies depending on factors such as the proportion of the halogenated organic compound to charcoal and the water content of the charcoal. It may be determined by the combustion calculation, taking into account of air volume, gas volume evolved, calories of charcoal and oil, and so on.

Generally, the amount of oil is at least equivalent to the combined amounts of halogenated organic compound and charcoal. The maximum proportion is conveniently around 3:7.

The mixture of halogenated organic compound, charcoal and oil admixed in the proportion described above should preferably be in a fluid or fluid-like state, such as in the form of a slurry.

This enables the mixture to be continuously fed to a combustion furnace so that processing is effected continuously. The mixture in such a fluid state is a solid-liquid heterogeneous system, in which all the components should preferably be dispersed uniformly. Where appropriate, the mixture may be made into a fluid state in the form of an emulsion, suspension or dispersion by the addition of a small amount of suitable surfactant.

In another aspect of the invention, a metallic catalyst is used together with the halogenated organic compound, charcoal and oil. Such a metallic catalyst may be used in order to promote the cleavage by charcoal of the carbon-halogen, e.g. carbon-chlorine, linkage, to improve the efficacy of degradation.

Examples of metallic catalysts include metal salts such as sulfates and chlorides of copper, nickel, manganese and iron. The amount of metallic catalyst may be optimized having regard to the efficacy of combustion. Normally, it may be used in a so-called catalytic amount. For example, if may be used in about equal amounts to that of charcoal in the form of 1% aqueous solution or, stated otherwise, about 1/100 of charcoal.

The mixture comprising the halogenated organic compound, charcoal, oil and metallic catalyst is preferably in a fluid state, as is also the case in a mixture system containing no metallic catalyst. The fluid state allows for continuous feeding of the mixture to a combustion furnace or, stated otherwise, a continuous combustion process.

The combustion of the mixture with or without the metallic catalyst may be effected by feeding air into the combustion system. If desired, oxygen may be added to the air in the combustion chamber. The gases evolved during combustion such as carbon dioxide and hydrogen halides may be absorbed in a suitable trap or traps containing suitable trapping agents such as an aqueous solution of sodium hydroxide, whereby preventing discharge to the atmosphere of the gases evolved.

According to the method of this invention, combustion may be conveniently carried out at a relatively low temperature of about 900-1,200 °C, normally at about 1,100 °C at the outlet of the combustion furnace.

The present method may advantageously be applied to post-treatment of charcoal containing toxic halogenated compounds such as PCDD, PCDF or hexachlorobenzene (HCB) separated during the purification of PCP bulk. In particular, we have earlier investigated a method of purifying PCP bulk to remove almost completely impurities contained therein (Japanese Patent Application No. 60-87982). The method comprises dissolving PCP in an aqueous solution of an alkali, contacting it with charcoal to have impurities such as PCDD, PCDF or HCB present in small amounts in the solution adsorbed onto the charcoal, and separating the charcoal from the aqueous solution by filtration. This method gives superior results in terms of separation of toxic impurities. However, disposal of the charcoal with adsorbed impurities should be avoided in view of environmental pollution, and hence, a post-treatment of the charcoal having adsorbed impurities is necessitated.

We have therefore also investigated a method of advantageously treating the harmful charcoal (Japanese Patent Application No. 61-117472). This method comprises the steps of maintaining the harmful charcoal at about 120 °C under reduced pressure, at which toxic impurities do not evaporate, but so that water and gases on the charcoal evaporate, subsequently maintaining the charcoal at above 600 °C under reduced pressure in a closed system so that the impurities sublime or evaporate by carbonization or thermal decomposition, and separating the decomposed matter, after cooling, from the charcoal.

This method has advantages in view of a low degree of environmental pollution. However, the method requires procedures such as the removal of water by preheating and separation of decomposed matter from charcoal, and therefore, a much quicker and practical method of treatment is desired.

The application of the method of the present invention may be performed, for example, with treatment of charcoal containing impurities that is recovered by a method disclosed in Japanese Patent Application No. 60-87982. Namely, impure PCP is dissolved in an aqueous solution of an alkaline substance such as sodium carbonate, potassium carbonate, sodium sulfite or potassium sulfite (normally dissolved in a heated aqueous alkaline solution) and insoluble matter filtered off. Alternatively, the sodium salt of PCP may be dissolved in water and, if necessary, insoluble matters are filtered off. Charcoal is then added to the aqueous solution to adsorb toxic impurities on it. For the purpose of adsorption, charcoal is used in an amount of 0.1-5 parts by weight, preferably 0.2-1 part by weight, most preferably about 0.5 parts by weight of 100 parts of PCP. After addition of charcoal, the solution is stirred gently for a while and the mixture is then filtered. Almost no chlorinated compounds are present in the filtrate except for PCP. Impurities such as PCDD, PCDF and HCB may be adsorbed on charcoal nearly quantitatively. About 2% of PCP are also adsorbed onto charcoal. The charcoal is then filtered to remove excess water.

The charcoal still contains, beside impurities and PCP, a large amount of water in an amount of about 70-80%. Normally, however, further removal of water is unnecessary. The charcoal containing toxic chlorinated organic compounds and water is then mixed, if necessary, with an additional amount of

3

charcoal, with an oil, surfactant, and further with a metallic catalyst as the case may be. The mixture is then subjected to combustion as described above.

The present invention will be described in more detail by the following non-limiting examples.

Example 1

(1) Purification of PCP

100 g of a technical grade PCP (purity higher than 90%), 20 g of sodium carbonate and 800 g of water were mixed and the mixture was heated at 80-90°C to dissolve the PCP. The solution, containing a small amount of insoluble matter, was mixed with 0.5 g of charcoal powder and stirred for 30 minutes. The mixture was filtered and the filtrate was acidified to precipitate purified PCP containing almost no toxic substances such as PCDD, PCDF or HCB.

(2) Treatment of the charcoal

2.5 Kg of a filter cake (comprising charcoal, insoluble matter, adsorbed impurities and PCP) obtained by a scale-up of the procedure described in (1) above were mixed with 7 kg of heavy oil A and 0.5 kg of an emulsifier (Sorpol No. 150B, Toho Kagaku). The mixture was preheated and then introduced into a combustion furnace. Combustion was continued to maintain the temperature of the outlet of the furnace at 1,100°C, while blowing in air at a rate of 145 $Nm^3/h$. The concentrations of HCl and $SO_2$ at the outlet of the furnace were 36 ppm and 160 ppm, respectively. The exhaust gas was passed through an ejector, while blowing in air at a rate of 400 $Nm^3/h$ to cool and dilute the gas. The temperature of the gas at the outlet was 350°C and the concentrations of HCl and $SO_2$ at the outlet of the chimney were 10 ppm and 44 ppm, respectively. The exhaust gas and the combustion residue in the furnace were sampled and the residue amounts of PCDD, PCDF and HCB were analyzed by the following procedures. Thus, for quantification of PCDD and PCDF, the exhaust gas was dissolved in methanol and in an aqueous alkaline solution and extracted with hexane. The solid combustion residue was subjected to Soxhlet extraction with toluene. Each extract was treated with sulfuric acid and subjected to chromatography through alumina to remove interfering substances and then subjected to quantitative analysis by way of mass fragmentography with a combined gas chromatograph/mass spectrograph. For quantification of HCB, the exhaust gas was dissolved in an aqueous solution of sodium hydroxide and extracted with hexane. The solid combustion residue was extracted with acetone and then it was dissolved in hexane. The extract was subjected to quantitative analysis by way of mass fragmentography with a combined gas chromatograph/mass spectrograph.

The concentrations of PCDD, PCDF and HCB in the charcoal before combustion (per dry matter), in the exhaust gas and in the solid combustion residue are shown in Tables 1 and 2. The amounts of PCDD and PCDF with the respective degree of chlorination are indicated as the sum of all isomers, unless the positions of chlorine atoms are indicated.

Table 1

| Amount of chlorinated organic compounds contained in charcoal before combustion | | |
|---|---|---|
| Compound | Analytical value (n = 2, ug/g) | |
| 2,3,7,8-Tetra CDD | <0.2 | <0.2 |
| 1,3,6,8-Tetra-CDD | <0.2 | <0.2 |
| Other tetra-CDDs | 0.28 | 0.30 |
| Penta-CDD | 1.4 | 1.6 |
| Hexa-CDD | 11.8 | 15.8 |
| 1,2,3,4,6,7,8-Hepta-CDD | 44 | 46 |
| 1,2,3,4,6,7,9-Hepta-CDD | 34 | 38 |
| Octa-CDD | 3400 | 3200 |
| 2,3,7,8-TCDF | <0.2 | <0.2 |
| HCB | 3200 | 3800 |

Table 2

| Amount of chloringated organic compounds contained in exhaust gas and combustion residue after combustion | | |
|---|---|---|
| Compound | Exhaust gas 9ng/m$\ell$) | Combustion residue (ng/g) |
| 2,3,7,8-Tetra-CDD | <1 | <1 |
| 1,2,3,7,8-Penta-CDD | <1 | <1 |
| 1,2,3,4,7,8-Hexa-CDD | <1 | <1 |
| 1,2,3,6,7,8-Hexa-CDD | <1 | <1 |
| 2,3,7,8-Tetra-CDF | <1 | <1 |
| 1,2,3,7,8-Penta-CDF | <1 | <1 |
| 2,3,4,7,8-Penta-CDF | <1 | <1 |
| 1,2,3,7,8,9-Hexa-CDF | <1 | <1 |
| 2,3,4,6,7,8-Hexa-CDF | <1 | <1 |
| HCB | <0.1 | <0.1 |

Example 2

0.2 of PCB, 2 g of charcoal and 2 g of heavy oil A were mixed and placed in a glass boat, which was then placed in an electric furnace. Heating was continued for 35 minutes with aeration at a rate of 0.5-0.6 l/min. The gas evolved from the furnace was trapped with trap 1 (200 ml of aniline), trap 2 (200 ml of hexane) and trap 3 (100 ml of hexane). The gas thus trapped was gas chromatographed under the following conditions:-

Apparatus : Yanagimoto Gas Chromatograph G-388
Dectector : Non-radioactive electron capture detector
Column : Silicone OV-101, 0.25 $\phi$ x 25 m
Dectector sensitivity : input sensitivity, $10^{-1}$ output sensitivity, 1/32
Injection temperature : 260° C
Column temperature : 160-245° C (elevated temperature)
Detector temperature : 270° C.

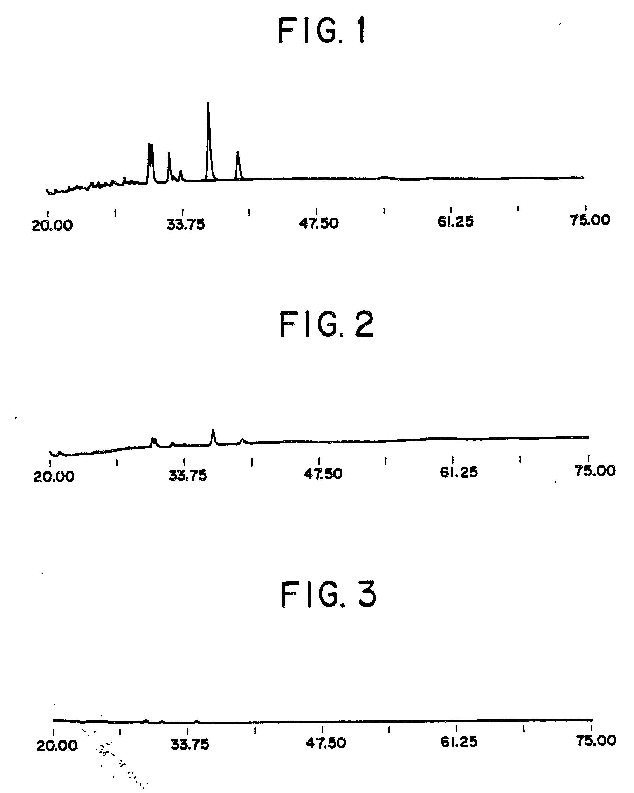

The gas chromatogram is as shown in Figure 1 of the accompanying drawings.

### Examples 3-6

2 g each of 1% aqueous solution of the catalysts, being the same amount as charcoal, which are copper sulfate (pentahydrate), ferric chloride (hydrate), manganese sulfate (tetrahydrate) or nickel sulfate (hexahydrate), were added to the system described in Example 2. Each mixture was subjected to combustion under the same conditions as those in Example 2. The results of gas chromatography are as shown in Figures 2 to 5 of the accompanying drawings.

### Reference Example 1

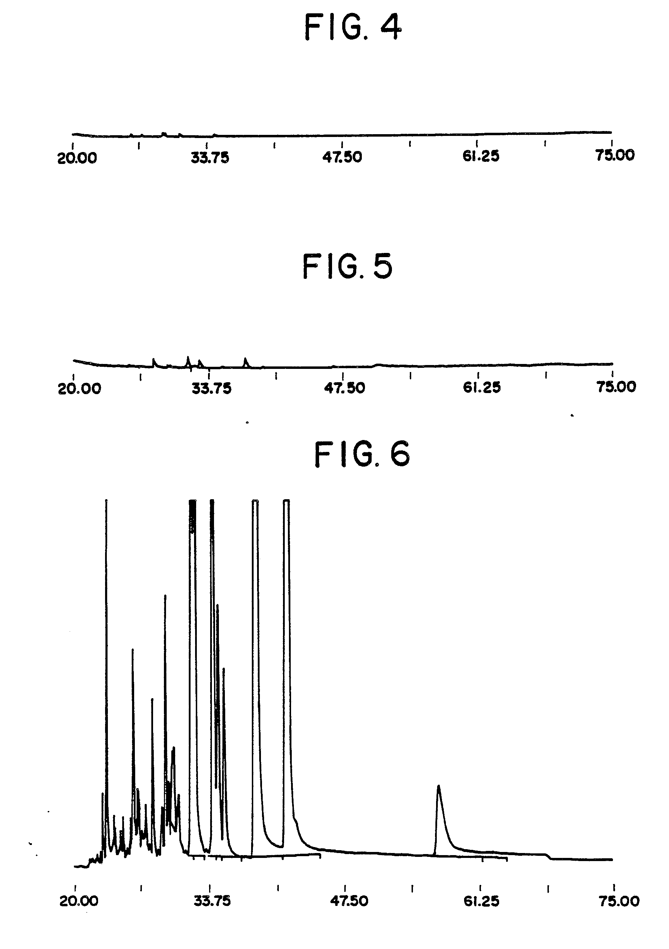

A mixture of Example 2, however in the case containing no charcoal, was subjected to combustion under the same conditions as those in Example 2. The result is of gas chromatography as shown in Figure 6 of the accompanying drawings.

### Reference Example 2

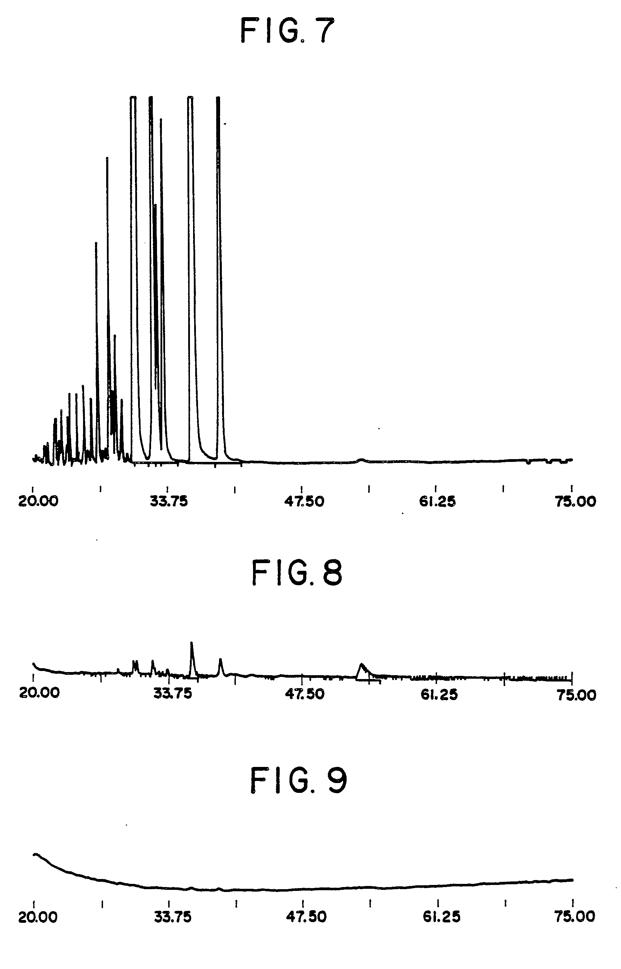

PCB as such without combustion treatment was gas chromatographed and the chromatogram is shown in Figure 7 of the accompanying drawings.

As will be apparent from the comparison of Figures 6 and 7, the gas chromatogram of Reference Example 1 in which PCB was subjected to heat degradation in the absence of charcoal is almost identical with that of Reference Example 2. This means that PCB may not be degraded noticeably under the conditions of Reference Example 1, that is treatment at 900°C for 35 minutes.

In contrast to this, the gas chromatogram of Example 2 (Figure 1) in which charcoal was added reveals that most of PCB was dissipated. The gas chromatograms of Example 3-6 (Figures 2-5) in which a metallic catalyst was further added show no noticeable peaks assigned to PCB and reveals that PCB was decomposed almost completely.

### Example 7

A combustion treatment similar to that of Example 2 was performed using 0.2 g of a commercially available technical grade PCP in place of PCB. The chromatogram is shown in Figure 8 of the accompanying drawings.

### EXamples 8-11

2 g each of 1% aqueous solution of the catalysts which are copper sulfate (pentahydrate), ferric chloride (hydrate), manganese sulfate (tetrahydrate) or nickel sulfate (hexahydrate), were added to the system described in Example 7.

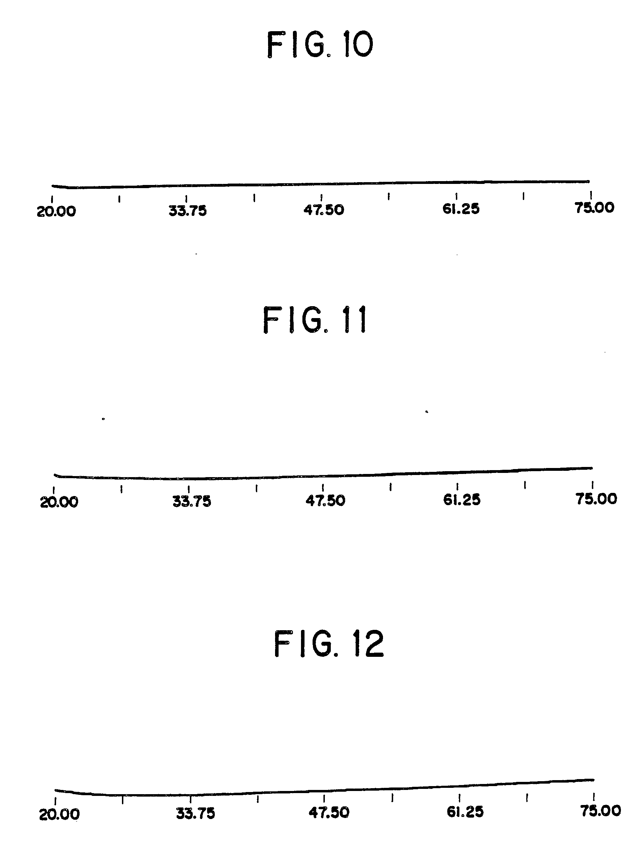

Each mixture was subjected to combustion under the same conditions as those in Example 7. The results are as shown in Figures 9 to 12 of the accompanying drawings.

### Reference Example 3

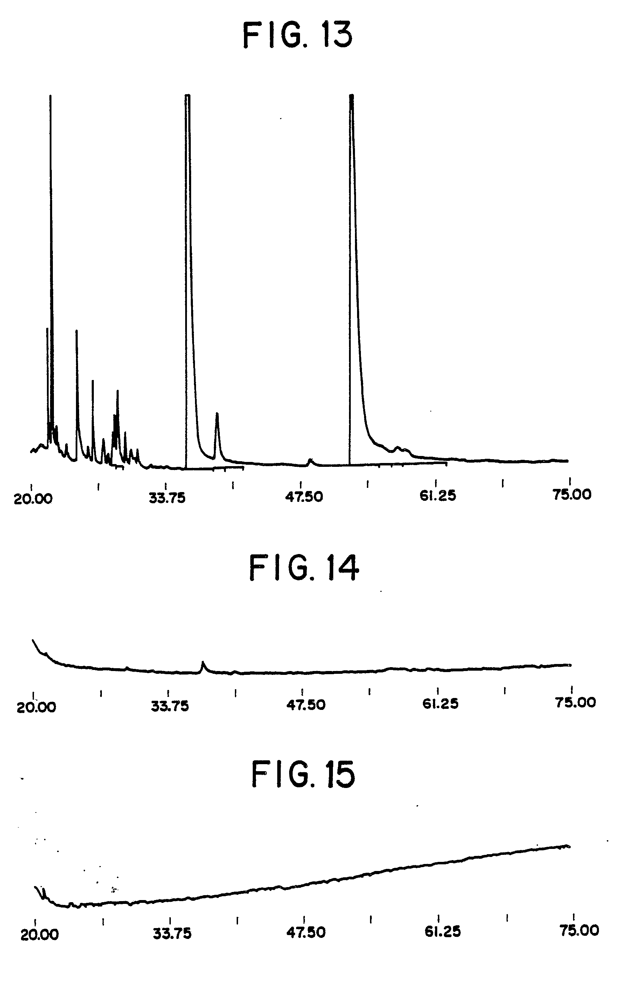

A mixture of Example 7, however containing no charcoal, was subjected to combustion under the same conditions as those in Example 7. The result is shown in Figure 13 of the accompanying drawings.

As will be apparent from a comparison of Figures 13 and 8, the gas chromatogram of Example 7 reveals a drastic reduction in amount of PCDD or the like compared with that of Reference Example 3 without charcoal and these show clearly thermal decomposition effects by charcoal of the toxic organic substances.

Further, as shown in Figures 9 to 12, PCDD or the like are present only in a trace amount in the systems of Examples 8 to 11 containing the metallic catalysts and these show clearly the remarkable effect by the catalysts.

### Example 12

A combustion treatment similar to that of Example 2 was performed using 0.2 g of a commercially available BHC of the technical grade in place of PCB. The chromatogram is shown in Figure 14 of the accompanying drawings.

### Example 13

A combustion treatment was performed under the same conditions as those in Example 12, except that it was performed at a temperature of 700°C. The result is shown in Figure 15 of the accompanying drawings.

### Example 14

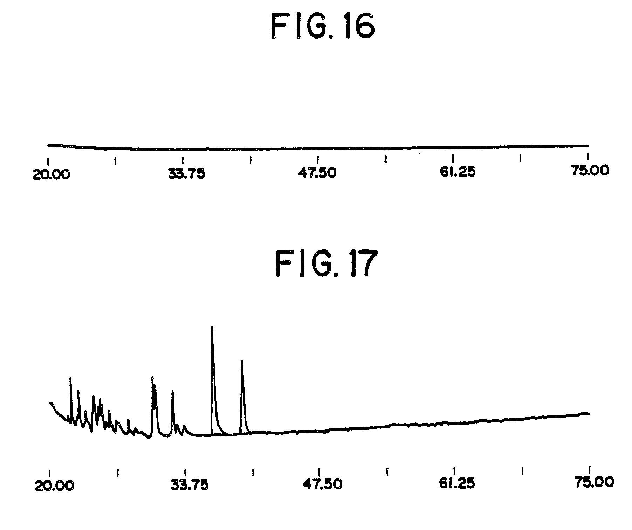

2 g or a 1% aqueous solution of copper sulfate (pentahydrate) were added to the mixture of Example 12 and the combustion treatment was performed under the same conditions with those in Example 12. The result is shown in Figure 16 of the accompanying drawings.

### Reference Example 4

A mixture of Example 12 but containing no charcoal was subjected to combustion treatment under the same conditions as those in Example 12. The result is shown in Figure 17 of the accompanying drawings.

As will be apparent from the comparison of Figures 17 and 14, peaks assigned to isomers of BHC and its impurities decrease drastically under the conditions of Example 12 containing charcoal compared with those in Reference Example 4 containing no charcoal, showing clearly the thermal decomposition effect of the charcoal. As is evident from Figure 15, the chlorinated organic compounds are almost completely decomposed at a relatively low temperature of 700°C in the presence of charcoal and this shows a significant contribution of charcoal to economy. Further, in the system of Example 14 in which copper sulfate is added, the chromatogram of Figure 16 is almost identical with the base line, showing an almost complete decomposition of the organic substances.

In summary, as is evident from Examples and Reference Examples, the method of the present invention in which halogenated organic compounds are subjected to thermal degradation in the presence of charcoal and an oil achieves a very high degradation efficacy compared with the method in which no charcoal is involved. The present method gives even better results where a metallic catalyst is present additionally.

## Claims

1. A method for non-polluting processing of a halogenated organic compound which comprises subjecting the compound to combustion in the presence of charcoal and an oil.

2. A method as claimed in claim 1, wherein the halogenated organic compound is a chlorinated organic compound.

3. A method as claimed in either of claims 1 and 2, wherein the mixture of the halogenated organic compound, charcoal and oil is in a fluid state.

4. A method as claimed in any preceding claim, wherein the mixture of the halogenated organic compound, charcoal and oil is continuously fed to a combustion furnace.

5. A method for non-polluting processing of a halogenated organic compound which comprises subjecting the compound to combustion in the presence of charcoal, an oil and a metallic catalyst.

6. A method as claimed in claim 5, wherein the halogenated organic compound is a chlorinated organic compound.

7. A method as claimed in either of claims 5 and 6, wherein the metallic catalyst is a compound of copper, nickel, manganese or iron.

8. A method as claimed in any one of claims 5 to 7, wherein the metallic catalyst is a metal salt selected from sulfates and chlorides of copper, nickel, manganese and iron.

9. A method as claimed in any one of claims 5 to 8, wherein the mixture of the said halogenated organic compound, charcoal, oil and metallic catalyst is in a fluid state

10. A method as claimed in any one of claims 5 to 9, wherein the mixture of the halogenated organic compound, charcoal, oil and metallic catalyst is continuously fed to a combustion furnace.

# FIG. 1

20.00    33.75    47.50    61.25    75.00

# FIG. 2

20.00    33.75    47.50    61.25    75.00

# FIG. 3

20.00    33.75    47.50    61.25    75.00

# FIG. 4

20.00    33.75    47.50    61.25    75.00

# FIG. 5

20.00    33.75    47.50    61.25    75.00

# FIG. 6

20.00    33.75    47.50    61.25    75.00

## FIG. 7

20.00    33.75    47.50    61.25    75.00

## FIG. 8

20.00    33.75    47.50    61.25    75.00

## FIG. 9

20.00    33.75    47.50    61.25    75.00

# FIG. 10

| | | | | | | | | |
|---|---|---|---|---|---|---|---|---|
| 20.00 | | 33.75 | | 47.50 | | 61.25 | | 75.00 |

# FIG. 11

| | | | | | | | | |
|---|---|---|---|---|---|---|---|---|
| 20.00 | | 33.75 | | 47.50 | | 61.25 | | 75.00 |

# FIG. 12

| | | | | | | | | |
|---|---|---|---|---|---|---|---|---|
| 20.00 | | 33.75 | | 47.50 | | 61.25 | | 75.00 |

# FIG. 13

# FIG. 14

# FIG. 15

# FIG.16

20.00    33.75    47.50    61.25    75.00

# FIG.17

20.00    33.75    47.50    61.25    75.00

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 560 391 (R.A.ASHWORTH) * Column 3, line 15 - column 4, line 9; column 5, line 20 - column 6, line 3; column 7, lines 29-47; claims * | 1-10 | A 62 D 3/00 F 23 G 7/00 |
| A | DESTRUCTION TECHNOLOGIES FOR POLYCHLORINATED BIPHENYLS (PCBs), Economic and Technical Review, Report EPS 3-EC-83-1, February 1983, pages 10-47, chapters 4.2,4.3, Toronto, CA * Pages 22-25, section 4.2.2.1; pages 45-47, section 4.3.4.1 * | 1-4 | |
| A | US-A-4 526 677 (L.R.F.GRANTHAM et al.) * The whole document * | 1-10 | |
| A | US-A-4 400 936 (G.EVANS) * The whole document * | 1-10 | |

TECHNICAL FIELDS SEARCHED (Int. Cl.4)

A 62 D
F 23 G

The present search report has been drawn up for all claims

| Place of search | Date of completion of the search | Examiner |
|---|---|---|
| THE HAGUE | 18-11-1988 | FLETCHER A.S. |

EPO FORM 1503 03.82 (P0401)